# EUROPEAN PATENT SPECIFICATION

(11) **EP 0 639 327 B1**
(45) Date of publication and mention of the grant of the patent: **08.03.2000**
(21) Application number: 94202312.8
(22) Date of filing: 12.08.1994
(51) Int. Cl.: A01J 7/00

(54) **A construction for automatically milking animals**
Vorrichtung zum automatischen Melken von Tieren
Dispositif de traite automatique d'animaux

(30) Priority: 16.08.1993 NL 9301414
(43) Date of publication of application: 22.02.1995
(60) Divisional application: 99202553.6
(73) Proprietor: MAASLAND N.V., 3155 PD Maasland (NL)
(72) Inventor: van der Lely, Cornelis, CH-6300 Zug (CH); Lunshof, Jan Halbe, NL-3145 NH Maassluis (NL)
(74) Representative: Corten, Maurice Jean F.M.

(56) References cited:
- EP-A- 0 091 892
- EP-A- 0 551 957
- NL-A- 8 602 505
- US-A- 4 617 876

## Description

The present invention relates to a construction according to the preamble of claim 1.

From EP-A-0 091 892, which serves as a basis for the preamble of claim 1, there is known a construction which comprises an animal stall provided with cubicles or cubical sheds and feeding places, in which stall the animals are allowed to walk about freely and from which stall they are allowed to go to the milk box. It is possible for the animals to present themselves at any time at the milk box, while there are provided time criteria for deciding whether an animal presenting itself at the milk box is actually allowed to be milked. With said time criterion the lapse of time from the preceding milking to the point of time when the animal presents itself again for milking is determined. As the criterion of time does not take other factors sufficiently into account, this criterion does not always lead to an optimum milk production. In order to augment the milk production, the construction as described in the opening paragraph has according to the invention the additional features set out in the characterising portion of claim 1.

As a criterion for admitting an animal to the milk box can further be taken the magnitude of the force necessary to depress the udder for a certain distance, for instance, of one or two centimetres. This force will be larger for a full udder than that for the udder of a recently milked animal. Finally, it should be stated that the decision whether to pass on an animal to the milk box or not can be arranged such that it is made independently of the instantaneous capacity of the milk box. When the connection of teat cups and the milking of all animals to be milked in the milk box by means of the milking robot proceeds without any difficulty, the milking robot will have a certain capacity left and animals can be milked earlier, whereas, when troubles occur, animals which otherwise comply with the given criteria for their being milked will still be sent back to the animal stall in order to be able to give priority to other animals whose last milking took place less recently. Each of the criteria mentioned, especially the last criterion, can be applied in conjunction with any other one of them.

Hereinafter, the invention and, particularly, the various criteria on the basis of which it is decided whether an animal is admitted to the milk box or not, will be further explained with reference to the following embodiment of the invention and the accompanying drawings, in which:
Figure 1 shows the arrangement of two rest boxes, the rear one of which is equipped for the selection of animals and the front one of which is used as a milk box. Here, means for picture recording for the purpose of determining the size or change in size of the udder are disposed at the side of the selection box;
Figure 2 shows an arrangement as indicated in Figure 1, except that, on either side of the selection box, sensors for the purpose of determining the size or change in size of the udder are disposed;
Figures 3 and 4 show an arrangement as indicated in the preceding Figures, however, with weighing means being provided in the floor of the selection box, and
Figures 5 shows an arrangement as indicated in the preceding Figures, but it is provided with weighing means for the animal's udder.

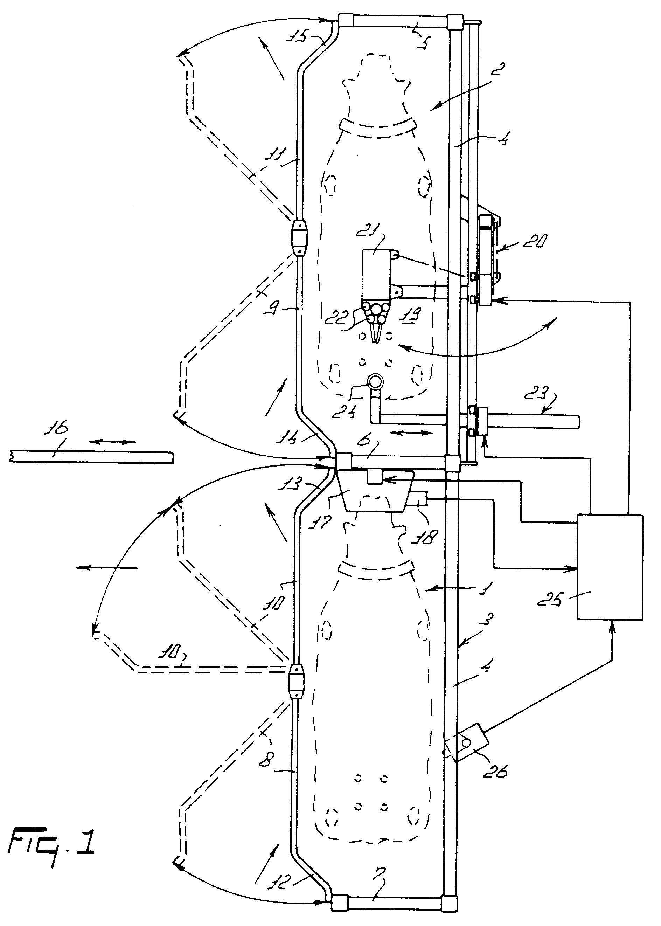

Figures 1 to 5 show two boxes 1 and 2 which connect with each other in the longitudinal direction. These boxes are bounded by a frame 3 comprising a frame part 4 forming a longitudinal side of the two boxes 1 and 2, frame parts 5, 6, and 7 forming the short sides of the boxes and, doors disposed on the other longitudinal side of boxes 1 and 2, where the entrance doors of boxes 1 and 2 are indicated by reference numbers 8 and 9, respectively, and the exit doors of the same are indicated by 10 and 11, respectively. The doors 8 and 9 are hinging at about halfway the long side of box 1, while the doors 8 an 10 are hinging at about halfway the long side of box 2. Each of the doors 8 to 11 has, disposed near its end and, in closed position, facing the centre of the relevant box, a part 12, 13, 14 and 15 respectively. These "inwardly oriented" parts 12 to 15 are disposed such that they are principally in line and run parallel to the longitudinal direction of the two boxes in case the doors are put in a first open position as indicated by a dashed line. Especially by putting the exit door 10 of box 1 and the entrance door 9 of box 2 into this first open position a sideward connection between box 1 and box 2 is created, allowing an animal to be led from box 1 into box 2. As shown in the Figure, there is also provided a partition 16 placed transversely to the longitudinal direction of the boxes, namely near the transverse frame part 6 between the two boxes. This partition 16 is movable in a direction transverse to the longitudinal direction of the boxes, with the partition 16 remaining in line with the transverse frame part 6. When the partition is in the position as indicated in the Figures, an animal is able to go from box 1 to box 2 when the doors 9 and 10 have been put into the first open position, whereas an animal can be led from box 1 into the animal stall belonging to the construction, when the partition 16 has been moved in the direction of the transverse frame part 6 and the door 10 has subsequently been put into a second open position indicated by dashed lines. The animall stall in this respect comprises resting boxes which are also known as cubical sheds. The system is also extremely well capable of operating without the partition 16, because of the fact that by keeping the door 9 closed and putting the door 10 into the second open position an animal is denied admission to the box 2 and is forced to enter the animal stall belonging to the construction. However, in case the space at the side of the doors 9 and 11 of box 2 should obtain a different destination, the movable partition is of importance. The doors 8 to 11 and possibly the partition 16 are under the control of the computer system 25. Particularly, the doors 9 and 10 and possibly the partition 16 constitute the means required to admit an animal from box 1 to box 2 or to return an animal to the animal stall belonging to the construction.

Only the box 1 is provided with an automatic feeder 17. Near this automatic feeder in box 1 there is provided an animal recognition sensor 18 which is connected to a computer system and which, together with a transponder to be borne by each of the animals, constitutes an animal recognition system. By means of this animal recognition system it is continually recorded which animal is present in the box 1 at any time.

For this purpose, in the memory of the computer system there is provided a separate file for each animal wherein all relevant information pertaining to the animal in question is stored. Especially, in this file it may be recorded when a certain animal's last milking took place, when it calved the last time, how far the animal's lactation period has advanced, what is the animal's milk yield with each milking etc. This information is of importance in deciding whether an animal that has entered the box 1 is allowed to be milked or not. Accordingly, the box 1 is arranged for the selection of animals, while - when by means of the animal recognition system and the data in the file of the relevant animal in the memory of the computer system it has been decided that an animal is allowed to be milked - it is also possible to seize the opportunity of cleaning the animal's udder and massaging it for stimulation of the milk production, if desirable, while in addition to this, the animal can be supplied with substrates in the box 1. The box 2 is laid out as a milk box to which an animal is admitted from box 1 in order to be milked.

For milking, in the box 2 there is provided a milking robot 19 comprising a robot arm construction 20 on the end of which is placed a robot head 21 serving as a carrier for a set of four teat cups 22. The milking robot 19 also comprises a carrier construction 23 for a detection device 24. The robot arm construction 20 provided with the robot head 21 and the teat cups 22 is capable of moving independently of the carrier construction 23 provided with the detection device 24.

When an animal is in the milk box 2, the detection device 24 is moved between the animal's hind legs to near the animal's udder by means of the carrier construction 23 under control of the computer system 25, and it is possible to determine accurately the teat positions with respect to the milk box by means of the detection device 24, and subsequently, the teat cups, in the mean while swung to underneath the animal by means of the robot arm construction and under control of the computer system 25, are connected to the teats.

When an animal is in the selection box 1, it must be decided whether the animal is allowed to pass to the milk box 2 or is sent back to the animal stall belonging to the construction. Various criteria may be applied in making this decision. As a first criterion may be taken the extent to which the animal's lactation period has advanced. Since animals have such a milk yield in the beginning of the lactation period that they might be milked more than three times, e.g. four or five times, per period of twenty-four hours, such an animal should be admitted to the milk box 2 more frequently and consequently, with priority over other animals whose lactation period has advanced considerably further. A second criterion can be an average milk yield based on a progressive average, independently of the extent to which the lactation period has advanced. For, animals having a regularly higher milk yield than other animals should also be capable of being milked more than three times, e.g. four or five times, per period of twenty-four hours. These animals, too, should be given priority as to admission to the milk box. It is also practicable to combine the two criteria mentioned and to make the decision whether an animal is admitted to the milk box on account of a standard made up of both the magnitude of the average milk yield and the extent to which the lactation period has advanced. Furthermore, it is possible to class the animals into groups according to their milk production and to fix, for each animal group, the number of times per period of twenty-four hours that the animals are admitted to the milk box. Through a suitable layout and equipment of the barn, such a group is capable of being led with priority over other animals or groups of animals to the milk box. As the animals are allowed to walk about freely in the animal stall of the construction, they can go to the milk box at any time. When the animals then enter the selection box 1, with reference to the said criteria it can be decided whether the animals are either admitted to the milk box or not. When certain animals should be milked a larger number of times than other animals, measures should also be taken to stimulate to go to the milk box those animals which nevertheless do not present themselves at the milk box. To this end, stimulating means for stimulating the animals to go to the milk box can be provided anywhere in the construction, particularly in cubiclees and feeding places. Through these stimulating means it is possible to produce, for instance, sound or light signals or, especially in the cubiclees or at the feeding places, to apply (electrical) current pulses to the animals conducive to their going from the cubicle or feeding place through the animal stall to the milk box. A suitable overall layout, particularly such an overall layout where the animals should follow a fixed route through the animal stall to the milk box, will certainly contribute to this.

The change in udder size may serve as a criterion for determining whether a certain animal is to be admitted to the milk box or not. There will be a clearly noticeable difference between the udder of an animal just after milking and the same after the lapse of a number of hours since the last milking. This difference can be observed, for instance, by means of the picture recording means 26 disposed at the side of the selection box in Figure 1. These picture recording means 26 are connected to the computer system 25 wherein the recorded picture can be analyzed. In doing so, known methods for picture and contour analysis can be adopted. If upon such an analysis it is found that a predetermined increase in the size of the udder occurred, then the animal can be passed on to the milk box.

Instead of picture recording means, sensors 27 and 28, as indicated in Figure 2, can also be used. These sensors are disposed on either side of the selection box 1, namely in the place of the udder of an animal when this animal is present in the selection box 1. Ultrasound sensors as well as laser sensors are suitable for use as sensors for determining the distance from the sensors to the animal's udder. Again, the sensors 27 and 28 are connected to the computer system 25 wherein the size or change in size of the udder can be fixed on the basis of the data as provided by the sensors 27 and 28 together with the dimensional data of the selection box 1. When the change in udder size is greater than a predetermined value, the animal can be admitted again to the milk box 2.

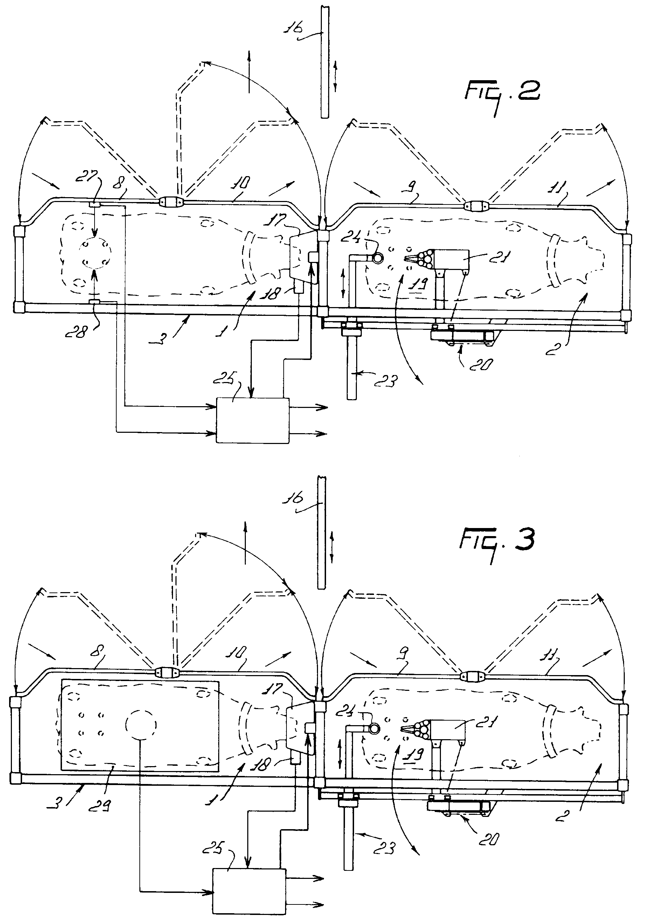

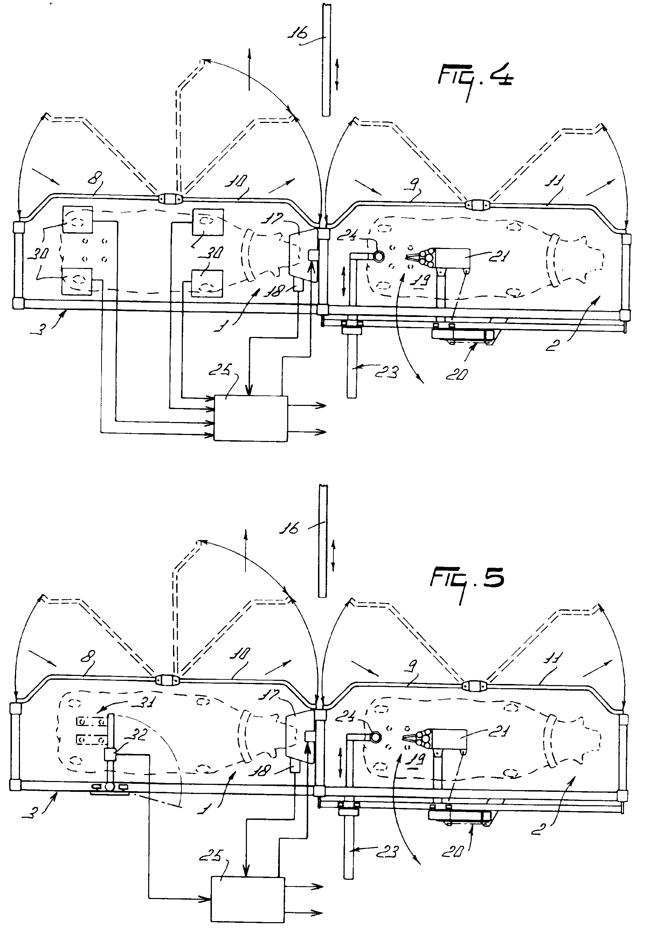

A further criterion to decide whether an animal is to be admitted to the milk box lies in the increase in weight of the animal as a result of milk production. In case of an increase in weight, for instance, amounting to about 10 or 20 kg between the weight of an animal just milked and the weight of the same animal after some time has lapsed after the last milking, the animal is passed on to the milk box. This change in weight can be determined by means of the weighing means disposed in the selection box 1. In Figure 3, these weighing means comprise a weighing platform 29 in the floor of the selection box 1. The weight measured by means of this weighing platform is passed on to the computer system 25 which compares this value against the previous weight measuring results and, on this basis, decides whether an animal is admitted to the milk box. In Figure 4, the weighing means are piezometric elements or analogous other pressure-sensing means 30 under the legs of an animal being in the selection box 1. These measuring means, too, are connected to the computer system 25 where through comparison of the latest measuring results against the preceding ones it is decided whether the animals are admitted to the milk box or not. Instead of weighing the whole animal, weighing the animal's udder only will also be sufficient. This can be done in an advantageous manner by making use of the cleaning means 31 in the selection box 1. When an animal is admitted to the milk box for being milked there, the its udder or at least its teats should be cleaned first. This cleaning takes place in the selection box when it has been decided that the animal being there is to be allowed to pass on to the milk box. Hence, the selection box is equipped with a cleaning device 31 which is capable of being swung - when an animal has entered the selection box - to a position under the animal's udder. By providing the cleaning device with means for weight detection 32 it is possible to determine the weight of the udder by moving the cleaning device upwards to such an extent that the animal's udder is slightly lifted up. The weight detection means 32 are connected to the computer system wherein it is determined whether the animal is to be admitted to the milk box.
If so, the animal being in the selection box is cleaned and then passed on to the milk box.

Means for depressing the udder for a certain distance, for instance, of one or two centimetres and for measuring the force required to do so can be disposed on the cleaning device 31 as well as in an arrangement isolated from the latter. If this depression calls for a certain predetermined minimum force, so much milk will have been produced (developed) that the animal can be sent on to the milk box.

The invention is not limited to the exemplary embodiments described here, but it eludes all kinds of modifications falling obviously within the scope of the claims stated hereinafter.

## Claims

1. A construction for automatically milking animals such as cows, provided with one or a number of rest boxes of which at least one is laid out as a milk box (2) equipped with a milking robot (19), while furthermore there is provided a computer system (25) for controlling the milking robot (19) and for automatically milking the animals, characterized in that there is provided one or a number of sensors (27, 28) to determine the size or change in size of the udder, where means are provided for registering the sensor data in the memory of the computer system (25) and wherein said sensor data are determinative to the decision whether an animal is to be admitted to be milked automatically by the computer-controlled milking robot or not.

2. A construction according to claim 1, characterized in that a sensor is made up of picture recording means (26) connected to the computer system, where the size or change in size of the udder is determined by means of picture analysis, and more particularly, contour analysis.

3. A construction according to claim 1 or 2, characterized in that there are provided at least two sensors (27, 28), such as ultrasound or laser sensors, disposed approximately on either side of the udder of an animal present in a rest box, for determining the distance to the animal's udder, from which data combined with the dimensional data of the rest box (1) the size or change in size of the udder is fixed.

4. A construction according to any one of the preceding claims, characterized in that there are provided two rest boxes (1, 2) which connect with each other and have to be passed through successively for milking.

5. A construction according to claim 4, characterized in that the rear rest box (1) is arranged as a selection box and the front rest box (2) is arranged as a milk box.

6. A construction according to claim 4 or 5, characterized in that an automatic feeder is provided in the rear box only.

7. A construction according to any one of the preceding claims, characterized in that there are provided means for depressing the udder for a certain distance and means for measuring the force required to do so, enabling the animal to be sent on to the milk box (1, 2) if this force exceeds a certain predetermined value.

8. A construction according to any one of the preceding claims, characterized in that in a cubicle is provided for the animal wherein there are provided signalling means which become operative when in the most recent 24-hours' period an animal has given a higher milk yield than in the preceding period.

9. A construction according to any one of the preceding claims, characterized in that said sensor means are sensor means through which it is possible to determine the distance from either side wall of the box to either side of the udder of an animal to be milked.

## Patentansprüche

1. Vorrichtung zum automatischen Melken von Tieren, wie z. B. Kühen, mit einer oder mehreren Ruheboxen, von denen mindestens eine als Melkbox (2) ausgeführt ist, die einen Melkroboter (19) aufweist, wobei ferner ein Computersystem (25) zum Steuern des Melkroboters (19) und zum automatischen Melken der Tiere vorgesehen ist,
dadurch gekennzeichnet, daß ein oder mehrere Sensoren (27, 28) zur Ermittlung der Größe oder Größenänderung des Euters vorgesehen sind, wobei eine Vorrichtung zum Aufzeichnen der Sensordaten im Speicher des Computersystems (25) vorhanden ist, und wobei die Sensordaten darüber entscheiden, ob ein Tier zum automatischen Melken durch den rechnergesteuerten Melkroboter zuzulassen ist oder nicht.

2. Vorrichtung nach Anspruch 1,
dadurch gekennzeichnet, daß ein Sensor aus einer Bildaufzeichnungsvorrichtung (26) besteht, die mit dem Computersystem verbunden ist, von welchem die Größe oder Größenänderung des Euters mittels Bildanalyse und insbesondere Konturanalyse ermittelt wird.

3. Vorrichtung nach Anspruch 1 oder 2,
dadurch gekennzeichnet, daß mindestens zwei Sensoren (27, 28), wie z. B. Ultraschall- oder Lasersensoren, vorgesehen sind, die annähernd auf beiden Seiten des Euters eines in einer Ruhebox befindlichen Tieres angeordnet sind, um die Distanz zum Euter des Tieres zu ermitteln, wobei aus diesen Daten in Kombination mit den Daten der Abmessungen der Ruhebox (1) die Größe oder Größenänderung des Euters ermittelt wird.

4. Vorrichtung nach einem der vorhergehenden Ansprüche,
dadurch gekennzeichnet, daß zwei Ruheboxen (1, 2) vorgesehen sind, die aneinander angrenzen und zum Melken nacheinander zu durchlaufen sind.

5. Vorrichtung nach Anspruch 4,
dadurch gekennzeichnet, daß die hintere Ruhebox (1) als Auswahlbox und die vordere Ruhebox (2) als Melkbox ausgeführt ist.

6. Vorrichtung nach Anspruch 4 oder 5,
dadurch gekennzeichnet, daß eine automatische Fütterungsvorrichtung nur in der hinteren Box vorhanden ist.

7. Vorrichtung nach einem der vorhergehenden Ansprüche,
dadurch gekennzeichnet, daß eine Vorrichtung zum Eindrücken des Euters bis zu einem gewissen Grad und eine Vorrichtung zum Messen der hierfür erforderlichen Kraft vorgesehen sind, wobei das Tier zur Melkbox (1, 2) zu schicken ist, wenn diese Kraft einen bestimmten vorgegebenen Wert überschreitet.

8. Vorrichtung nach einem der vorhergehenden Ansprüche,
dadurch gekennzeichnet, daß für das Tier eine Box vorgesehen ist, in der eine Anzeigevorrichtung angeordnet ist, die aktiviert wird, wenn ein Tier in den letzten 24 Stunden mehr Milch geliefert hat als im vorhergehenden Zeitraum.

9. Vorrichtung nach einem der vorhergehenden Ansprüche, dadurch gekennzeichnet, daß es sich bei den Sensorvorrichtungen um Vorrichtungen handelt, mittels derer der Abstand von jeder Seitenwand der Box zu jeder Seite des Euters eines zu melkenden Tieres zu ermitteln ist.

## Revendications

1. Installation pour traire de manière automatique des animaux tels que des vaches, munie de un ou plusieurs box de repos dont au moins un est agencé au niveau d'un box de traite (2) muni d'un robot de traite (19), alors qu'en outre un système d'ordinateur (25) est fourni pour commander le robot de traite (19) et pour traire automatiquement les animaux, caractérisée en ce qu'il est fourni un ou plusieurs détecteurs (27, 28) pour déterminer la dimension ou le changement de dimension du pis, des moyens étant fournis pour enregistrer les données de détecteur dans la mémoire de l'ordinateur (25) et lesdites données de détecteur étant déterminantes pour décider si un animal doit être admis ou non pour être trait automatiquement par le robot de traite commandé par ordinateur.

2. Installation selon la revendication 1, caractérisée en ce qu'un détecteur est constitué de moyens d'enregistrement d'image (26) reliés à l'ordinateur, la dimension ou le changement de dimension du pis étant déterminée par l'intermédiaire d'une analyse d'image, et plus particulièrement, d'une analyse de contour.

3. Installation selon la revendication 1 ou 2, caractérisée en ce qu'il est fourni au moins deux détecteurs (27, 28), tels que des détecteurs à ultrasons ou à laser, disposés approximativement de chaque côté du pis d'un animal présent dans un box de repos, pour déterminer la distance jusqu'au pis de l'animal, données à partir desquelles en combinaison avec les données de dimension du box de repos (1) la dimension ou le changement de dimension du pis sont fixés.

4. Installation selon l'une quelconque des revendications précédentes, caractérisée en ce qu'il est fourni deux box de repos (1, 2) qui sont reliés l'un à l'autre et à travers lesquels il faut passer successivement pour la traite.

5. Installation selon la revendication 4, caractérisée en ce que le box de repos arrière (1) est agencé en tant que box de sélection et le box de repos avant (2) est agencé en tant que box de traite.

6. Installation selon la revendication 4 ou 5, caractérisée en ce qu'un dispositif d'alimentation automatique est agencé dans le box arrière uniquement.

7. Installation selon l'une quelconque des revendications précédentes, caractérisée en ce qu'il est fourni des moyens pour diminuer la hauteur du pis sur une certaine distance et des moyens pour mesurer la force nécessaire pour le faire, permettant à l'animal d'être envoyé vers le box de traite (1, 2) si cette force dépasse une certaine valeur prédéterminée.

8. Installation selon l'une quelconque des revendications précédentes, caractérisée en ce qu'un compartiment est agencé pour l'animal, dans lequel sont agencés des moyens de signalisation qui deviennent opérationnels lorsque dans la période de vingt-quatre la plus récente un animal a donné un rendement en lait plus élevé que dans la période précédente.

9. Installation selon l'une quelconque des revendications précédentes, caractérisée en ce que lesdits moyens formant détecteur sont des moyens par l'intermédiaire desquels il est possible de déterminer la distance depuis l'une ou l'autre paroi latérale du box vers l'un ou l'autre des pis d'un animal à traire.
